# EUROPEAN PATENT APPLICATION

(11) **EP 4 080 505 A1**
(43) Date of publication of application: **26.10.2022**
(21) Application number: 22169324.5
(22) Date of filing: 21.04.2022
(51) Int. Cl.: G11B 7/0065, G11B 7/08

(54) **MULTI-CHANNEL MULTIPLEXING METHOD AND DEVICE FOR DISC STORAGE MEDIUM**

(30) Priority: 21.04.2021 CN 202110431558
(71) Applicant: Amethystum Storage Technology Co., Ltd., Meizhou, Guangdong 514700 (CN)
(72) Inventor: HU, Dejiao, Shejiang Town, Mei County, Meizhou, 514700 (CN); LIU, Yicheng, Shejiang Town, Mei County, Meizhou, 514700 (CN); TIAN, Jun, Shejiang Town, Mei County, Meizhou, 514700 (CN)
(74) Representative: Puschmann Borchert Kaiser Klettner Patentanwälte Partnerschaft mbB

(57) **Abstract**

The present invention provides a multi-channel multiplexing method and device for a disc storage medium. The method includes: S1) recording holograms at holographic positioning marks of the storage medium by a reference light beam and a signal light beam, S2) rotating the storage medium in a circumferential direction and repeatedly performing step S1 until the holograms have been recorded at all the holographic positioning marks on optical tracks, S3) translating the storage medium to switch an optical head to another optical track, S4) repeating steps S1-S3 until recording of one cross channel is completed, S5) changing a relative angle of the center of the storage medium with respect to the optical head, and repeating steps S1-S4 to complete recording of another cross channel, S6) repeating steps S1-S5 until recording of all cross channels is completed, and S7) reproducing the holograms at any channel or recording position of the storage medium by using the same beam of reference light. Each cross channel consists of all the holograms recorded by the optical head at the same relative angle with respect to the medium. The method and device improve the hologram storage capacity of the storage medium and the signal-to-noise ratio of the holograms.

## Description

### CROSS REFERENCE TO RELATED APPLICATIONS

The present application claims priority from Chinese Patent Application No. 202110431558.5 filed on April 21, 2021, all of which are hereby incorporated herein by reference.

### TECHNICAL FIELD

The present invention relates to the field of holographic storage, and more particularly, relates to a multi-channel multiplexing method and device for a disc storage medium.

### BACKGROUND

According to the holographic optical storage technology, input information is converted into a two-dimensional digital bitmap and is loaded into a signal light beam. The modulated signal light beam interferes with a reference light beam in a photopolymer storage medium to form holograms which are stored in the form of refractive index changes of the storage medium. The input information can be read through a reproduction procedure where the holograms are illuminated by a reproducing reference light beam. Benefit from the large storage capacity, long storage life time, high transfer rate, etc., the optical holographic storage technology has become a promising candidate for long term information storage.

At present, the multiplexing methods of holographic storage recording and reproducing mainly include (1) angular multiplexing recording, (2) coaxial multiplexing recording, (3) spherical reference light shift multiplexing recording, and (4) cross multiplexing recording.

In method (1), multiplexing recording of the hologram is performed by changing the incident angle of the reference light. In this method, the Bragg diffraction condition can only be satisfied in a very narrow angular range. For example, one hologram is recorded every time the incident angle of the reference light changes by about 0.1 degree, so that hundreds of holograms can be recorded at the same position. Since this method requires moving the medium to ensure that a series of new holograms are re-recorded at another position where the new hologram does not overlap with the previous holograms, the storage capacity is limited, and the signal light beam or reference light beam of the hologram will be scattered by the previously recorded holograms, which reduces the signal-to-noise ratio of the holograms.

In method (2), the signal light is coaxial with the reference light, and the reference light is subjected to phase or amplitude speckle modulation. In the hologram recording process, moving each recorded hologram only by a very small distance relative to the previous hologram without requiring to ensure that the hologram at each position does not overlap with the holograms at other positions, for example, moving by 2 µm or 3 µm in a two-dimensional plane. However, this method cannot be used with the angular multiplexing recording, the storage capacity is still limited, and since the signal light and the reference light are close to each other, large crosstalk is generated and the signal-to-noise ratio is reduced, resulting in poor signal quality.

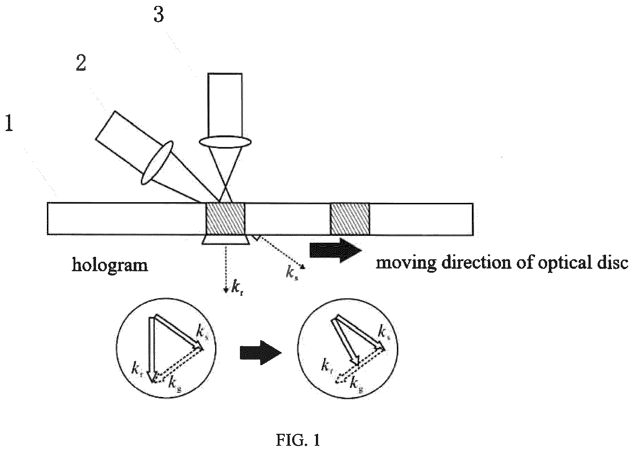

In method (3), by using the spherical wave as the reference light, a new hologram can be recorded by moving the medium for a certain distance. As shown in FIG. 1, according to the Bragg condition, the signal light wave vector *ks,* the reference light wave vector kr and the holographic grating vector kg form a vector triangle. When the medium is moved for a short distance after the hologram is recorded, the three vectors no longer form a triangle, the Bragg condition is no longer established, and the originally recorded hologram cannot be reproduced, so the next hologram can be recorded.

In method (4), cross multiplexing recording of holograms is achieved by rotating the grating vector along the plane of the storage medium. Under the constraints of the Bragg diffraction condition, cross recording can be performed for many times within the range of an angle of circumference, thereby increasing the storage capacity.

Based on influence factors such as crosstalk and noise of holograms, the number of holograms recorded by multiplexing of the above four methods is still very limited, and none of them can maximize the multiplexing possibility of the storage medium. Therefore, in the field of holographic optical storage, it is still desirable to develop a method that can avoid the influence of crosstalk and noise of holograms and can greatly increase the multiplexing number of holograms.

### SUMMARY

The present invention thus provides a multi-channel multiplexing method and device for a disc storage medium, which is free from the aforesaid drawbacks of the existing methods.

According to the present invention, the multi-channel multiplexing method for a disc storage medium includes:
S1) recording holograms with a reference light beam and a signal light beam carrying input information exposure at holographic positioning marks, aligned with an optical head, on an optical track of the storage medium,
S2) rotating the storage medium in a circumferential direction from a position where the optical head is aligned with a start mark on the optical track, and repeatedly performing step S1 in the rotating process until holograms have been recorded at all holographic positioning marks on the optical track,
S3) translating the storage medium to switch the optical head to another optical track,
S4) repeating steps S1-S3 until holograms recording of one cross channel is completed,
S5) changing a relative angle of the center of the storage medium with respect to the optical head, and repeating steps S1-S4 to complete holograms recording of another cross channel,
S6) repeating steps S1-S5 until holograms recording of all cross channels of the storage medium is completed, and
S7) reproducing holograms at any channel and any recording position on the storage medium by using the same reference light beam, each cross channel consisting of all the holograms recorded by the optical head at the same relative angle with respect to the storage medium.

The multi-channel multiplexing method for the disc storage medium provided according to the present invention achieves circumferential shift multiplexing on the storage medium and cross shift multiplexing. Since each cross channel is composed of holograms recorded by the optical head at the same relative angle with respect to the storage medium, namely, it shows that holograms recorded at each cross channel are recorded by the optical head at a different relative angle with respect to the storage medium, the holograms recorded at different cross channels can be free of mutual crosstalk even if their positions coincide, thus greatly improving the number of multiplexing holograms recording and also improving the signal-to-noise ratio of the holograms.

According to some embodiments by changing the relative angle of the center of the storage medium with respect to the optical head, an included angle formed by a grating vector of the hologram and a tangent of the optical track where the hologram is located is changed.

When the relative angle of the optical head with respect to the center of the storage medium changes, the included angle formed by the grating vector of the hologram and the tangent of the optical track where the hologram is located will change at the same time. That is, the directions of the grating vectors of the holograms of different cross channels are different. Therefore, even if the positions of the holograms of different cross channels coincide, crosstalk will not occur because the directions of the grating vectors are different, resulting increased storage capacity of the storage medium and higher signal-to-noise ratio of the recorded holograms.

A minimum included angle between the grating vectors of the holograms of the different cross channels at the same position refers to a crossing angle. Depending on the different magnitudes of the crossing angles, there may be 1 to 1000 cross channels.

The reference light beam is in form of spherical wave.

The reference light beam and the signal light beam are of off-axis structures, which avoids the crosstalk problem when the reference light and the signal light are close to each other in an on-axis structure to form shift multiplexing.

The optical tracks are concentric circular optical tracks arranged on the storage medium, and each of the optical tracks is divided into at least one sector. Each sector divides the optical track into a plurality of parts for fast random access of data.

Each sector on the optical track is provided with a start mark which pre-set an optical track information and sector number information. The start mark is used as a starting point for recording/reproducing the s and is rapidly addressed by reading the number information. The holographic positioning mark is arranged in the sector for locating a hologram recording position. Rotating the storage medium in the circumferential direction in step S2 is specifically rotating the storage medium around its center in the circumferential direction.

Translating the storage medium to switch the optical head to another optical track in step S3 is specifically achieved by moving the storage medium in a radius direction of the storage medium from inside to outside or from outside to inside with respect to the storage medium to switch the optical head to another optical track.

Changing the relative angle of the center of the storage medium with respect to the optical head in step S5 is specifically: changing the relative angle of the center of the storage medium with respect to the optical head by translating the center of the storage medium around an arc-shaped trail of the optical head.

Distances between various optical tracks corresponding to different cross channels and intervals between the holograms recorded on the various corresponding optical tracks are different.

A multi-channel multiplexing device for a disc storage medium is further provided, which is used for recording/reproducing a signal on the storage medium, including: a recording mechanism, a rotating mechanism and a translating mechanism.

The recording mechanism is configured for generating a signal light beam and a reference light beam. The signal light beam and the reference light beam interfere on the storage medium and are exposed to generate holograms. The rotating mechanism is configured for driving the storage medium to perform a rotary motion around the center thereof so as to make the storage medium rotate in a circumferential direction, so that holograms are recorded/reproduced at a plurality of positions on the same optical track by the signal light and the reference light. The translating mechanism is configured for driving the storage medium to translate in a radius direction thereof so that holograms are recorded/reproduced by the signal light and the reference light on different optical tracks. The translating mechanism is also configured for driving the storage medium to perform a linear or arc-shaped translational motion so as to change the relative angle of the center of the storage medium with respect to an optical head, so that holograms are recorded/reproduced by the signal light beam and the reference light beam at different cross channels, each of the cross channels consisting of all holograms recorded by the optical head at the same relative angle with respect to the storage medium.

The device further includes an addressing mechanism for locating a starting point of each optical track for recording and reproducing the hologram, and an optical head locating mechanism for locating the optical head.

The optical tracks are concentric circular optical tracks arranged on the storage medium, and each of the optical tracks is divided into at least one sector. Each sector on the optical track is provided with a start mark. Optical track information and sector number information is pre-set in the start mark. The start mark is used as the starting point for recording/reproducing the holograms and is rapidly addressed by reading the number information. Holographic positioning marks are arranged in the sector for locating a hologram recording position.

Compared with the existing art, the present invention has the beneficial effects that the multi-channel multiplexing method for the disc storage medium provided by the present invention combines two multiplexing methods of circumferential rotation shift multiplexing and cross shift multiplexing of the storage medium, so that various holograms of the same cross channel do not coincide in position and are free of mutual crosstalk, and at the same time, the holograms of different cross channels are free of mutual crosstalk even if the positions coincide, which greatly improves the storage amount of the holograms of the storage medium, and improves the signal-to-noise ratio of the holograms.

### BRIEF DESCRIPTION OF THE DRAWINGS

FIG. 1 is a schematic diagram illustrating principle of a spherical wave shift multiplexing recording method.
FIG. 2 is a schematic diagram of cross shift multiplexing on a disc storage medium according to an embodiment (θ=0°, 180°).
FIG. 3 is a schematic diagram of cross shift multiplexing on the disc storage medium according to an embodiment (0=60°, 120°).
FIG. 4 is a schematic diagram of cross shift multiplexing on the disc storage medium according to an embodiment (θ=240°, 300°).
FIG. 5 is a schematic diagram showing position of an optical head at the time of recording/reading at different cross channels on the disc storage medium according to an embodiment (θ=0°, 240°).
FIG. 6 is a structural schematic diagram of a multi-channel multiplexing recording device for a disc storage medium according to an embodiment.

### DETAILED DESCRIPTION

The accompanying drawings of the present invention are only used for exemplary illustration, and should not be construed as limitation to the present invention. In order to better illustrate the following embodiments, some parts in the drawings may be omitted, enlarged or reduced, and they do not represent the size of actual products. For those skilled in the art, it is understandable that some well-known structures and their descriptions in the drawings may be omitted.

A multi-channel multiplexing method for a disc storage medium is provided according to an embodiment, including seven steps.

In step of S1, a reference light beam and a signal light beam carrying input information are performed exposure at holographic positioning marks, aligned with an optical head, to form hologram on optical tracks of the storage medium.

Specifically, the reference light beam is spherical wave. The reference light beam and the signal light beam are of off-axis structures, which avoids crosstalk problem when the reference light and the signal light are close to each other in an on-axis structure, which results in shift multiplexing. In step S1, the storage medium refers to a medium for recording holographic storage information, formed after interference of the reference light beam and the signal light beam, i. E. the medium of holograms. The disc storage medium, such as a circular holographic optical disc, is a suitable choice for the method of this embodiment. The optical head refers to a component that emits the reference light beam and the signal light beam. The optical track refers to a track on the storage medium for locating the recording position of the hologram. Specifically, if the storage medium is the disc storage medium, the optical tracks are generally concentric circular optical tracks, specifically being circular grooves or ridges, with a certain distance between each optical track. Preferably, each optical track is divided into at least one sector, each sector is provided with a start mark which is pre-set optical track and sector number information The start mark is used as a starting point for recording/reproducing the hologram and is rapidly addressed by reading the number information. The holographic positioning mark is arranged in the sector for locating the recording position of the hologram, and each holographic positioning mark in step S1 is the recording/reading position of each hologram.

In step of S2, the storage medium is rotated in a circumferential direction from a position where the optical head is aligned with the start mark on each optical track, and step S1 is repeatedly performed in the rotating process until holograms have been recorded at all holographic positioning marks on the optical tracks.

In this step, when the optical head is aligned with the start mark on one optical track, the storage medium is made to rotate in a circumferential direction by rotating the storage medium, in the rotating process, a recording mechanism is triggered by a signal from the holographic positioning mark to repeatedly perform step S1 to record holograms. A minimum distance between two holograms should be free from mutual crosstalk, and preferably, the minimum distance ranges from 1 µm to 10 µm. It can be seen therefrom that in step S2, it is to perform circumferential shift multiplexing recording of the holograms on each optical track of the storage medium until the holograms have been recorded at all holographic positioning marks on each optical track.

In step of S3, the storage medium is translated to switch the optical head to another optical track.

Specifically, the storage medium is translated so that the optical head is aligned with another optical track. The direction of translation is to move in a radius direction of the storage medium from inside to outside or from outside to inside with respect to the optical disc, and in the moving process, the relative movement direction of the optical head keeps in the radius direction of the storage medium.

In step of S4, steps S1-S3 are repeated until holograms recording of one cross channel is completed.

In step of S5, a relative angle of the center of the storage medium with respect to the optical head is changed, and steps S1-S4 are repeated to complete holograms recording of another cross channel.

In step of S6, steps S1-S5 are repeated until hologram recording of all cross channels is completed.

The cross channels in step S4 and step S5 refer to that all holograms are recorded on the storage medium by the optical head at the same relative angle with respect to the center of the storage medium, and these holograms are distributed on a plurality of optical tracks of the storage medium. In step S4, when holograms recording of one cross channel is completed, step S5 is performed to change the relative angle of the center of the storage medium with respect to the optical head. Changing the relative angle can be realized specifically by fixing the optical head and moving the storage medium so that the center of the storage medium translates around the arc-shaped trail of the optical head, thereby changing the angle formed by the connecting line between the optical head and the center of the storage medium and the vertical direction. After changing the relative angle of the center of the storage medium with respect to the optical head, the hologram is re-recorded from the optical track where the previous cross channel is finally recorded until holograms recording of this cross channel is completed. In step S6, steps S1 to S5 are repeated until holograms recording of all cross channels is completed.

In step S5, while changing the relative angle of the center of the storage medium with respect to the optical head, the included angle formed by the incident plane of the optical head, i. E. the direction of the grating vector, and the positive half axis of the tangent axis of the optical track at the position of the optical head is also changed, and the direction in which the grating vector of the hologram is recorded on the storage medium is also changed. Therefore, even if the holograms of different cross channels coincide in position, since the directions of the grating vectors of the holograms are different, mutual crosstalk will not be caused. The channel number of the cross channels n=[360°/θ ], wherein θ is a minimum included angle between the grating vectors of two holograms without crosstalk, and [360°/0] denotes the rounding of 360°/0. Preferably, θ in this embodiment is 10°. That is in step S5, the relative angle of the center of the storage medium with respect to the optical head is changed by 10° each time, so that the relative angle of the optical head with respect to the center of the storage medium is 0° 10°, 20°,.., 340° and 350° in sequence, thereby achieving cross multiplexing in the storage medium by 36 times, namely, there are 36 cross channels.

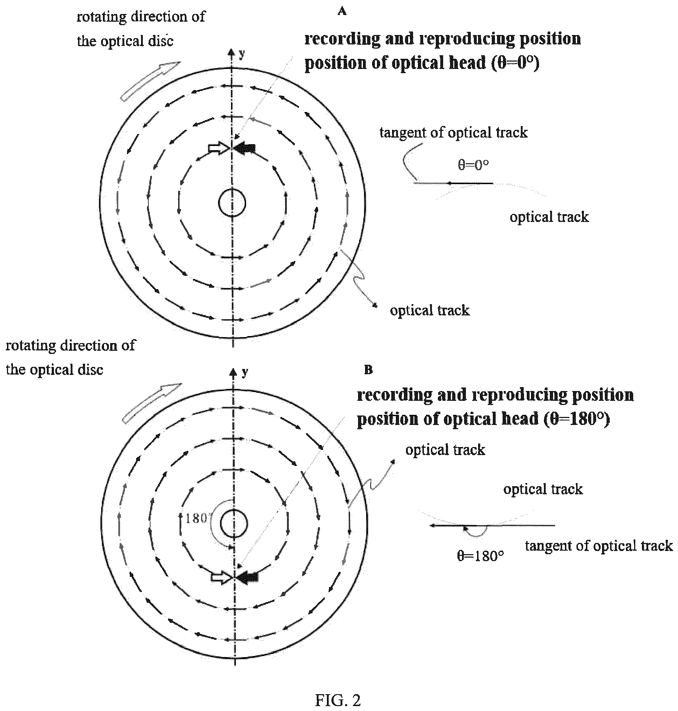

As shown in FIG. 2, taking a cross channel A as an example, the storage medium is moved so that the included angle formed by the connection line of the center of the storage medium and the optical head and the vertical direction (i. E. a y-axis in FIG. 2) is 0 degree, namely, the included angle (hereinafter referred to as a grating vector included angle) formed by the direction of the grating vector of the hologram and the positive half axis of the tangent axis of the optical track at the position of the optical head is 0 degree. The optical head is positioned to a first optical track (i. E. the optical track closest to the storage medium) via an optical track signal of each optical track, the storage medium is then rotated, the optical head identifies the start mark of the sector on the optical track, the optical disc continues to rotate, when the optical head is aligned with each holographic positioning mark after the start mark, steps S1-S2 are conducted to perform circumferential shift multiplexing of the storage medium, and steps S3-S4 are performed to translate the storage medium so that the optical head moves to another optical track in a radial direction relative to the storage medium for recording, until holograms with the grating vector included angle of 0 degree are recorded on all the optical tracks. The direction of the grating vector of the hologram of the cross channel A is in the counterclockwise direction of the optical track (i. E. the positive direction of the tangential axis of the optical track). Step S5 is further performed, the storage medium is moved to make that the included angle formed by the connection line between the center of the storage medium and the optical head and the vertical direction (i. E. the y-axis in FIG. 2) is 180 degrees, and holograms recording of cross channel B is started. As shown in FIG. 2, the direction of the grating vector of the hologram obtained by the cross channel B is in the clockwise direction of the optical track (i. E. the included angle with the positive direction of the tangential axis of the optical track is 180 degrees). It can be seen therefrom that since the directions of the grating vectors of the holograms recorded by the cross channel A and the cross channel B are opposite, even if they overlap with each other at the same position, they are free of mutual crosstalk.

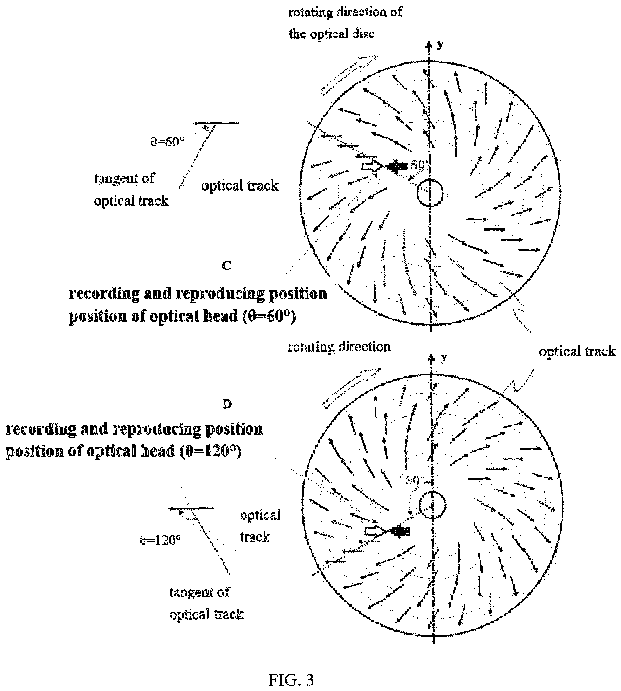

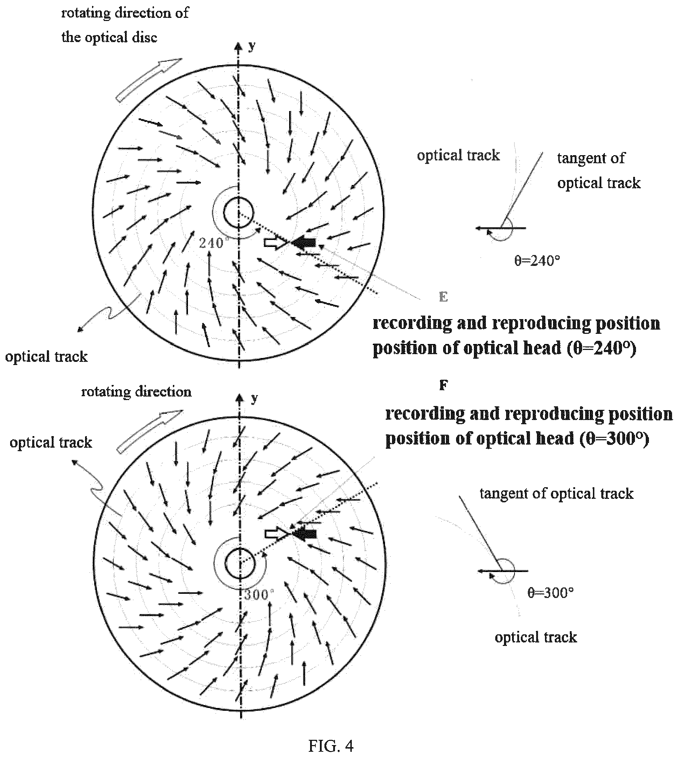

As shown in FIG. 3 and FIG. 4, when recording of the cross channel A or the channel B is completed, the storage medium is moved to make that the included angle formed by the connection line between the optical head and the center of the storage medium and the vertical direction (i. E. a y-axis in FIG. 3 and FIG. 4) is 60 degrees, and recording the hologram of a cross channel C is completed by performing steps S1-S4, and the grating vector included angle of the hologram of the cross channel C is 60 degrees. By analogy, step S5 is performed so that the included angle formed by the connection line between the optical head and the center of the storage medium and the vertical direction (i. E. the y-axis in FIG. 3 and FIG. 4) is 120 degrees, 240 degrees or 300 degrees to complete recording the hologram of a cross channel D, E or F, and the grating vector included angle of the hologram of the cross channel D, E or F is 120 degrees, 240 degrees or 300 degrees. As shown in FIGs. 2-4, the directions of grating vectors of the holograms recorded by the six cross channels from the cross channel A to the cross channel F do not coincide with each other, crosstalk will not occur even if they are at the same position.

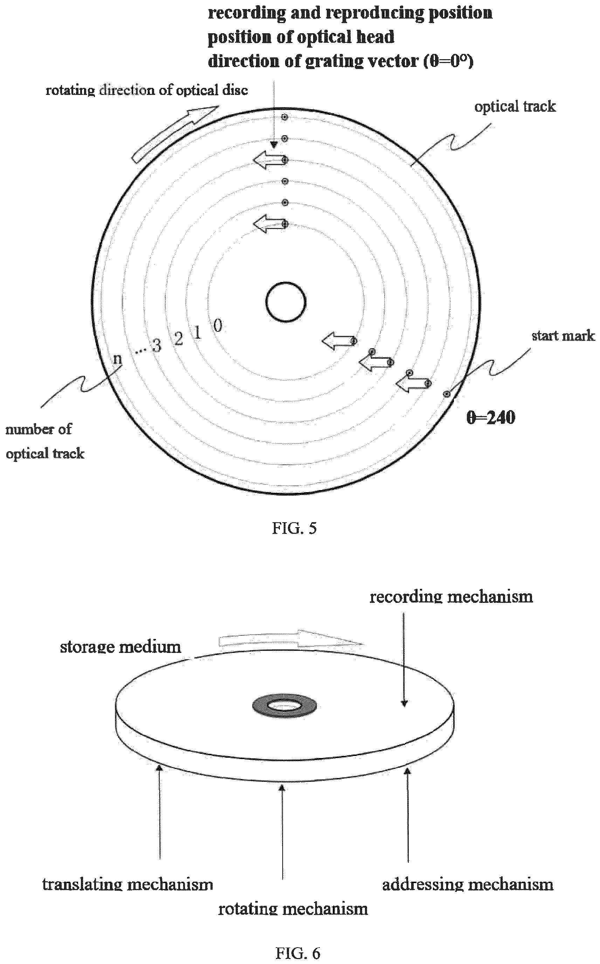

At the same time, since the grating vector included angles of the holograms in all the cross channels are different, shift multiplexing step lengths of each cross channel on each optical track are different, and intervals of holograms in different optical tracks of each cross channel in the radial direction are also different. Thus, different optical tracks are selected for different cross channels for recording, which ensures that the holograms in all the cross channels have the minimum interval in the radial direction and are free of crosstalk. As shown in FIG. 5, taking the cross channel A and the cross channel E as an example, because the cross channel A and the cross channel E have different multiplexing spacing distances in the radial direction, the optical tracks occupied by them are different. In FIG. 5, it schematically depicts the condition that the optical tracks occupied by these two cross channels are different. All the cross channels share the optical track No. 0, and other optical tracks are optimally set according to the radial multiplexing interval of each channel, for example, the optical track No. 3 is one optical track with holograms recorded in the cross channel A, and the optical tracks No. 2 and 4 are two optical tracks with holograms recorded in the cross channel E.

In step of S7, holograms at any recording position on the storage medium is reproduced with the same reference light beam.

In this step, the storage medium is firstly moved to make the optical head at the corresponding angular position of each cross channel, the cross channel then is positioned through a positioning mark signal provided by each optical track, and the storage medium is rotated to position the optical head to the start mark of the optical track to read address information. The holograms are finally read by the same reference light beam. the holograms recorded by circumferential multiplexing are reproduced at each shift position by moving the storage medium, and the holograms recorded by cross shift multiplexing are reproduced by changing the relative angle of the center of the storage medium with respect to the optical head.

It can be seen therefrom that the present method realizes recording holograms by shift multiplexing in steps S1-S2, and realizes recording holograms by cross shift multiplexing on a plurality of optical tracks of the storage medium in steps S5-S6. Since the directions of the grating vectors of the holograms recorded at different cross channels are different, crosstalk will not be generated even if there is overlap in each position. In combination with shift multiplexing recording in step S2, the storage capacity of the storage medium is greatly improved, and the signal-to-noise ratio of the hologram is also improved, so that information reproduced in step S7 can be accurately read.

Based on the same idea as the above-mentioned multi-channel multiplexing method for the disc storage medium, a multi-channel multiplexing device for the disc storage medium for recording/reproducing a signal on the storage medium is further provided according to an embodiment, as shown in FIG. 6, which includes a recording mechanism, a rotating mechanism, and a translating mechanism.

The recording mechanism is configured to generate a signal light beam and a reference light beam. The signal light beam and the reference light beam interfere on the storage medium to generate a hologram. Specifically, the reference light beam is in form of spherical wave, and the reference light beam and the signal light beam are of off-axis structures.

The rotating mechanism is configured to drive the storage medium to perform a rotary motion around the center thereof so as to make the storage medium rotate in a circumferential direction, so that holograms are recorded/reproduced at a plurality of positions on the same optical track by the signal light beam and the reference light beam.

According to one embodiment, the minimum distance of each shift of the storage medium controlled by the rotating mechanism should ensure that crosstalk cannot be generated between the holograms recorded by the recording mechanism at respective shift positions, and preferably, the minimum distance ranges from 1 µm to 10 µm. The optical tracks are generally concentric circular optical tracks, specifically being circular grooves or ridges, and there is a certain distance between all the optical tracks.

According to one embodiment, the device further includes an optical head locating mechanism for locating an optical head, and an addressing mechanism for locating a starting point of each optical track for recording and reproducing the hologram. Preferably, each optical track is divided into at least one sector, and each sector is provided with a start mark which is pre-set optical track and sector number information. The start mark is used as the starting point for recording/reproducing the hologram and is rapidly addressed by reading the number information. Holographic positioning marks are arranged in the sector for locating a hologram recording position. Therefore, the addressing mechanism detects the start mark of the optical track and the position of the holographic positioning mark, so that the recording mechanism performs hologram recording at the holographic positioning mark.

The translating mechanism is configured to drive the storage medium to translate in a radius direction thereof so that holograms are recorded/reproduced by the signal light and the reference light on different optical tracks. The translating mechanism is also configured for driving the storage medium to perform a linear or arc-shaped translational motion so as to change the relative angle of the center of the storage medium with respect to the optical head, so that holograms are recorded/reproduced by the signal light beam and the reference light beam at different cross channels.

Specifically, each cross channel consists of all holograms recorded by the optical head at the same relative angle with respect to the storage medium.

The translating mechanism drives the storage medium to translate in the radius direction thereof. The direction of translation refers to movement in the radius direction of the storage medium from inside to outside or from outside to inside with respect to an optical disc. In the moving process, the relative movement direction of the optical head is kept in the radius direction of the storage medium, so that the optical head can record/read the hologram at different optical tracks.

The translating mechanism is also used for changing the relative angle, which is specifically achieved by fixing the optical head and moving the storage medium so that the center of the storage medium translates around the arc-shaped trail of the optical head, thereby changing the angle formed by the connecting line between the optical head and the center of the storage medium and the vertical direction. When changing the relative angle of the center of the storage medium with respect to the optical head, the recording mechanism re-records holograms from the optical track where the previous cross channel is finally recorded until recording the hologram of this cross channel is completed. The rest can be done in the same manner.

Specifically, the translating mechanism changes the relative angle of the center of the storage medium with respect to the optical head, and at the same time, changes the included angle formed by the incident plane of the optical head, i. E. the direction of the grating vector, and the positive half axis of the tangent axis of the optical track at the position of the optical head, so that the direction of the grating vector of the hologram recorded by the recording mechanism is also changed. Therefore, even if holograms of different cross channels coincide in the position, since the directions of the grating vectors of the holograms are different, mutual crosstalk will not be caused. The channel number of the cross channels n=[360°/θ], wherein θ is the minimum included angle between the grating vectors of two holograms without crosstalk, and [360°/0] denotes the rounding of 360°/θ. Preferably, θ in this embodiment is 10°. That is in step S5, the relative angle of the center of the storage medium with respect to the optical head is changed by 10° each time, so that the relative angle of the optical head with respect to the center of the storage medium is 0°, 10°, 20°,.., 340° and 350° in sequence, thereby achieving cross multiplexing in the storage medium by 36 times, namely, there are 36 cross channels. Recording of six cross channels and switching of different cross channels can refer to FIGs. 2-6 and description of the multi-channel multiplexing method described above, which will not be repeated herein.

The multi-channel multiplexing device for the disc storage medium further includes a reading device. The reference light beam generated by the above-mentioned recording mechanism is used to reproduce a pre-recorded hologram at any position on the storage medium. The reading device is used to receive and read information in the hologram reproduced by the reference light of the recording mechanism.

It can be seen therefrom that the multi-channel multiplexing device provided in this embodiment realizes recording holograms by shift multiplexing of the hologram mainly through the rotating mechanism, and recording holograms by cross shift multiplexing on multiple optical tracks of the storage medium mainly through the translating mechanism. Since the grating vectors of the holograms recorded at different cross channels are different in direction, crosstalk will not occur even if there is overlap in one position, which greatly improves the storage capacity of the storage medium, and improves the signal-to-noise ratio of the holograms, so that information reproduced by the recording mechanism can be accurately read by the reading device.

Obviously, the above-mentioned embodiments of the present invention are only examples for clearly illustrating the technical solutions of the present invention, and are not intended to limit the specific modes of implementation of the present invention. Any modifications, equivalent replacements, improvements, etc. made within the spirit and principles of the claims of the present invention shall be included within the protection scope of the claims of the present invention.

## Claims

1. A multi-channel multiplexing method for a disc storage medium, comprising:
S1) recording holograms with reference light beam and signal light beam carrying input information exposure at holographic positioning marks, aligned with an optical head, on an optical track of the storage medium,
S2) rotating the storage medium in a circumferential direction from a position where the optical head is aligned with a start mark on the optical track, and repeatedly performing step S1 in the rotating process until holograms have been recorded at all holographic positioning marks on the optical track,
S3) translating the storage medium to switch the optical head to another optical track,
S4) repeating steps S1-S3 until holograms recording of one cross channel is completed,
S5) changing a relative angle of the center of the storage medium with respect to the optical head, and repeating steps S1-S4 to complete holograms recording of another cross channel,
S6) repeating steps S1-S5 until holograms recording of all cross channels of the storage medium is completed, and
S7) reproducing the holograms at any channel and any recording position on the storage medium by using the same reference light beam,
wherein each cross channel consists of all holograms recorded by the optical head at the same relative angle with respect to the storage medium.

2. The shift multiplexing method according to claim 1, wherein the reference light beam is in form of spherical wave.

3. The shift multiplexing method according to claim 1, wherein the reference light beam and the signal light beam are of off-axis structures.

4. The multiplexing method according to any one of claims 1-3, wherein by changing the relative angle of the center of the storage medium with respect to the optical head, an included angle formed by a grating vector of the hologram and a tangent of the optical track where the hologram is located is changed.

5. The multiplexing method according to claim 4, wherein the included angle formed by the grating vector of the hologram and the tangent of the optical track where the hologram is located changes along with a change of the relative angle of the center of the storage medium with respect to the optical head.

6. The multiplexing method according to claim 5, wherein all holograms with the same included angle between the grating vectors of the holograms and the tangent of the optical track where the hologram is located form one cross channel, and a minimum included angle between the grating vectors of the holograms of different cross channels at the same position is a crossing angle, depending on different magnitudes of the crossing angles, 1 to 1000 cross channels are included.

7. The multiplexing method according to any one of the preceding claims, wherein the optical tracks are concentric circular optical tracks arranged on the storage medium, and each of the optical tracks is divided into at least one sector.

8. The multiplexing method according to claim 7, wherein each sector on the optical track is provided with a start mark which is pre-set optical track information and sector number information, the start mark is used as a starting point for recording/reproducing the holograms and is rapidly addressed by reading the sector number information, and at least one holographic positioning mark is arranged in the sector for locating a hologram recording position, and
wherein rotating the storage medium in the circumferential direction in step S2 is conducted by rotating the storage medium around its center in the circumferential direction.

9. The multiplexing method according to any one of the preceding claims, wherein translating the storage medium to switch the optical head to another optical track in step S3 is conducted by moving the storage medium in a radius direction of the storage medium from inside to outside or from outside to inside with respect to the storage medium to switch the optical head to another optical track.

10. The multiplexing method according to any one of the preceding claims, wherein changing the relative angle of the center of the storage medium with respect to the optical head in step S5 is conducted by changing the relative angle of the center of the storage medium with respect to the optical head by translating the center of the storage medium around an arc-shaped trail of the optical head.

11. The multiplexing method according to any one of the preceding claims, wherein distances between all optical tracks corresponding to different cross channels and intervals between holograms recorded on all the corresponding optical tracks are different.

12. A multi-channel multiplexing device for a disc storage medium, used for recording/reproducing a signal on the storage medium, comprising:
a recording mechanism for generating a signal light beam and a reference light beam, the signal light beam and the reference light beam interfering on the storage medium and being exposed to generate holograms,
a rotating mechanism for driving the storage medium to perform a rotary motion around the center thereof so as to make the storage medium rotate in a circumferential direction, so that the holograms are recorded/reproduced at a plurality of positions on the same optical track by the signal light and the reference light, and
a translating mechanism for driving the storage medium to translate in a radius direction thereof so that the holograms are recorded/reproduced by the signal light and the reference light on different optical tracks, and also for driving the storage medium to perform a linear or arc-shaped translational motion so as to change a relative angle of the center of the storage medium with respect to an optical head, so that the holograms are recorded/reproduced by the signal light beam and the reference light beam at different cross channels,
wherein each of the cross channels consists of all holograms recorded by the optical head at the same relative angle with respect to the storage medium.

13. The multiplexing device according to claim 12, further comprising:
an addressing mechanism for locating a starting point of each optical track for recording and reproducing the hologram, and
an optical head locating mechanism for locating the optical head.

14. The multiplexing device according to any one of claims 12-13, wherein the optical tracks are concentric circular optical tracks arranged on the storage medium, and each of the optical tracks is divided into at least one sector, each sector on the optical track is provided with a start mark in which optical track information and sector number information is pre-set, and
wherein the start mark is used as a starting point for recording/reproducing the holograms and is rapidly addressed by reading the sector number information, and at least one holographic positioning mark is arranged in the sector for locating a hologram recording position.
